# EUROPEAN PATENT APPLICATION

(11) **EP 4 224 913 A1**
(43) Date of publication of application: **09.08.2023**
(21) Application number: 20956291.7
(22) Date of filing: 30.09.2020
(51) Int. Cl.: H04W 24/10

(54) **CHANNEL CONDITION INFERENCE METHOD AND BASE STATION**

(71) Applicant: NTT DOCOMO, INC., Chiyoda-Ku Tokyo 100-6150 (JP)
(72) Inventor: OFUJI, Yoshiaki, Tokyo 100-6150 (JP); YU, Feng, Beijing 100190 (CN); LIU, Liu, Beijing 100190 (CN); ZHENG, Xufei, Beijing 100190 (CN); LI, Anxin, Beijing 100190 (CN); KAWAI, Hiroyuki, Beijing 100190 (CN); CHEN, Lan, Beijing 100190 (CN)
(74) Representative: Hoffmann Eitle
(86) International application number: PCT/JP2020/037331
(87) International publication number: WO 2022/070363

(57) **Abstract**

Provided is a channel condition inference method wherein a wireless system receives channel condition information from a terminal, inputs the channel condition information for machine learning, and infers the channel condition for the period until the time of reception of the next channel condition information.

## Description

### Technical Field

The present disclosure relates to a channel state estimation method and a base station.

### Background Art

Open Radio Access Network (O-RAN) Alliance has been established with the purpose of promoting open and intelligent radio access network in the 5G era. O-RAN alliance aims to achieve the intelligent RAN and the optimization thereof in the entire network by utilizing machine learning (e.g., see Non-Patent Literature (hereinafter referred to as "NPL") 1).

### Citation List

### Non-Patent Literature

NPL 1
Sadayuki ABETA et al., "O-RAN Alliance standardization trend," NTT DOCOMO Technical Journal, vol.27, No. 1, pp.8-13, April 2019

### Summary of Invention

### Technical Problem

O-RAN stipulates the utilization of machine learning, but indicates no specific utilization method of machine learning.

An aspect of the present disclosure is to estimate a channel state in radio communication with utilization of machine learning.

### Solution to Problem

A channel state estimation method according to an aspect of the present disclosure includes: receiving, by a radio system, channel state information from a terminal; and estimating, by the radio system, a channel state during an interval until reception of next channel state information, by inputting the channel state information to machine learning.

A base station according to an aspect of the present disclosure includes: a reception section that receives channel state information from a terminal; and an estimation section that estimates a channel state during an interval until reception of next channel state information, by inputting the channel state information to machine learning.

### Advantageous Effects of Invention

According to the present disclosure, it is possible to estimate a channel state in radio communication with utilization of machine learning.

### Brief Description of Drawings

FIG. 1 is a diagram provided for describing an exemplary timing of feedback of Channel State Information (CSI);
FIG. 2 is a diagram provided for describing an exemplary CSI estimation method;
FIG. 3 illustrates an exemplary configuration of a radio system according to the present disclosure;
FIG. 4 is a diagram provided for describing an operating action of the radio system;
FIG. 5 is a diagram provided for describing an example of machine learning that is applied to the radio system;
FIG. 6A illustrates an exemplary NN architecture that is applied to the radio system;
FIG. 6B illustrates an exemplary NN architecture that is applied to the radio system;
FIG. 7 is a diagram provided for describing a loss function for determining a weight;
FIG. 8A is a diagram provided for describing an example of data set processing;
FIG. 8B is a diagram provided for describing an example of data set processing;
FIG. 9 is a diagram provided for describing performance evaluation of a communication system;
FIG. 10 illustrates a reference architecture of Open Radio Access Network (O-RAN);
FIG. 11 illustrates an exemplary functional block of the radio system and is a diagram provided for describing an exemplary functional block of the radio system;
FIG. 12 is another diagram provided for describing an exemplary functional block of the radio system;
FIG. 13 is still another diagram provided for describing an exemplary functional block of the radio system;
FIG. 14 is a diagram provided for describing an exemplary control timing of the radio system;
FIG. 15 illustrates architecture examples of CU and DU; and
FIG. 16 illustrates an exemplary hardware configuration of each of CU, DU, a terminal, a server, and a measurement terminal.

### Description of Embodiments

Hereinafter, an embodiment according to an aspect of the present disclosure will be described with reference to the accompanying drawings.

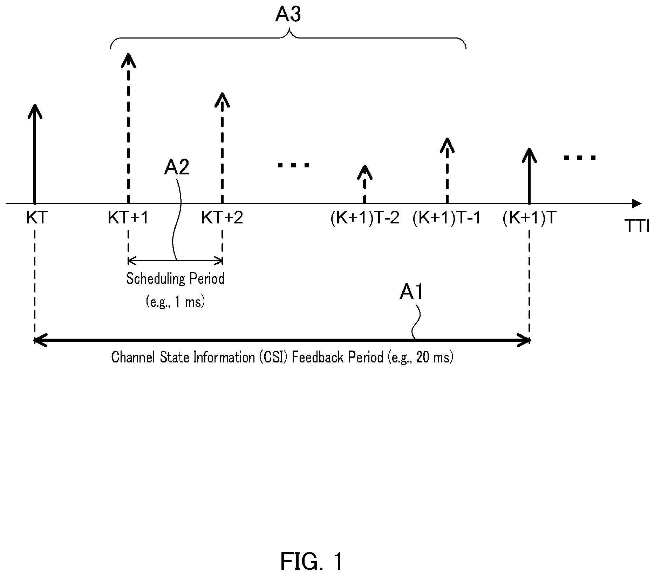

FIG. 1 is a diagram provided for describing an exemplary timing of CSI feedback. A base station performs scheduling of communication of a terminal by using a CSI to be fed back from the terminal. For example, the base station periodically transmits, to the terminal, a CSI-RS used to estimate (predict) a channel state of a propagation path. The terminal estimates the channel state of the propagation path based on the received CSI-RS and feeds a CSI back to the base station via UCI. The CSI to be fed back to the base station includes, for example, CQI, PMI, and RI. The base station performs scheduling of the terminal by using the CSI fed back from the terminal. The scheduling of the terminal may include, for example, radio resource allocation, MCS selection, and beam selection. The radio resource allocation may include distribution of resources.

Incidentally, CSI is an abbreviation for Channel State Information. CSI-RS is an abbreviation for a CSI-Reference Signal. UCI is an abbreviation for Uplink Control Information. CQI is an abbreviation for a Channel Quality Indicator. PMI is an abbreviation for a Precoding Matrix Indicator. RI is an abbreviation for a Rank Indicator. MCS is an abbreviation for a Modulation and coding Scheme.

The terminal feeds back a CSI at a timing of double-headed arrow A1 illustrated in FIG. 1, for example. A CSI feedback period is, for example, 20 ms.

The base station performs scheduling of the terminal using the CSI fed back from the terminal. The base station performs scheduling of the terminal at a timing of double-headed arrow A2 illustrated in FIG. 1, for example. A scheduling period of the base station may be, for example, a Transmission Time Interval (TTI).

As illustrated in double-headed arrow A1 and double-headed arrow A2 in FIG. 1, the period in which the terminal feeds back a CSI is longer than the period in which the base station performs scheduling of the terminal. The base station estimates a CSI during an interval of feedback periods of CSIs and performs scheduling of the terminal by using the estimated CSI.

By way of example, the base station estimates a CSI illustrated in dotted arrow A3. The base station performs scheduling of the terminal by using the estimated CSI in the interval of feedback periods of CSIs.

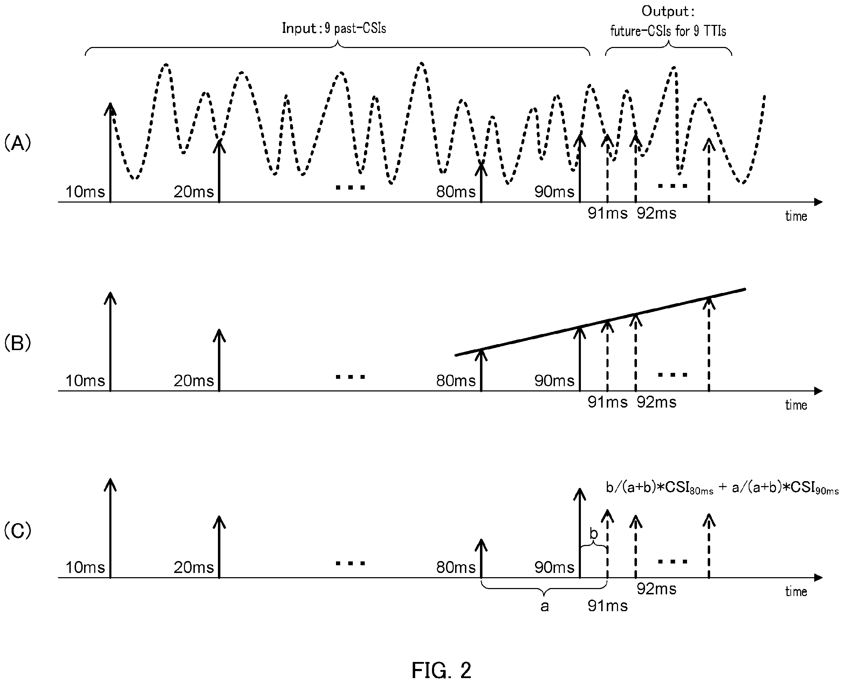

FIG. 2 is a diagram provided for describing an exemplary CSI estimation method. Solid arrows illustrated in FIG. 2 each indicates a CSI to be fed back to the base station. In the example of FIG. 2, a CSI is fed back to the base station in a period of 10 ms.

In (A) of FIG. 2, the base station performs scheduling of the terminal by using the CSI that has been fed back most recently. For example, the base station performs scheduling of the terminal at 91 ms, 92 ms, ..., 99 ms by using the CSI fed back at 90 ms.

In (B) of FIG. 2, the base station performs scheduling of the terminal based on a linear extrapolation of two CSIs that has been fed back most recently. For example, the base station performs scheduling of the terminal at 91 ms, 92 ms, ..., 99 ms based on the linear extrapolation of the two CSIs fed back at 80 ms and 90 ms.

In (C) of FIG. 2, the base station performs scheduling of the terminal based on the weighted average of two CSIs that has been fed back most recently. For example, the base station performs scheduling of the terminal at 91 ms, 92 ms, ..., 99 ms based on the weighted average of the two CSIs fed back at 80 ms and 90 ms.

A CSI estimation based on a linear interpolation illustrated in FIG. 2 may be less accurate. For example, during an interval in which a CSI is estimated, a position and a moving speed of the terminal may change, and thus, a difference may occur between the estimated CSI and a CSI actually observed in the interval of feedback periods of CSIs.

In a radio system of the present disclosure, machine learning is used for the CSI estimation in a Medium Access Control (MAC) layer. This improves the CSI estimation in the radio system. The improved CSI estimation allows the radio system to perform scheduling more appropriately and improve throughput.

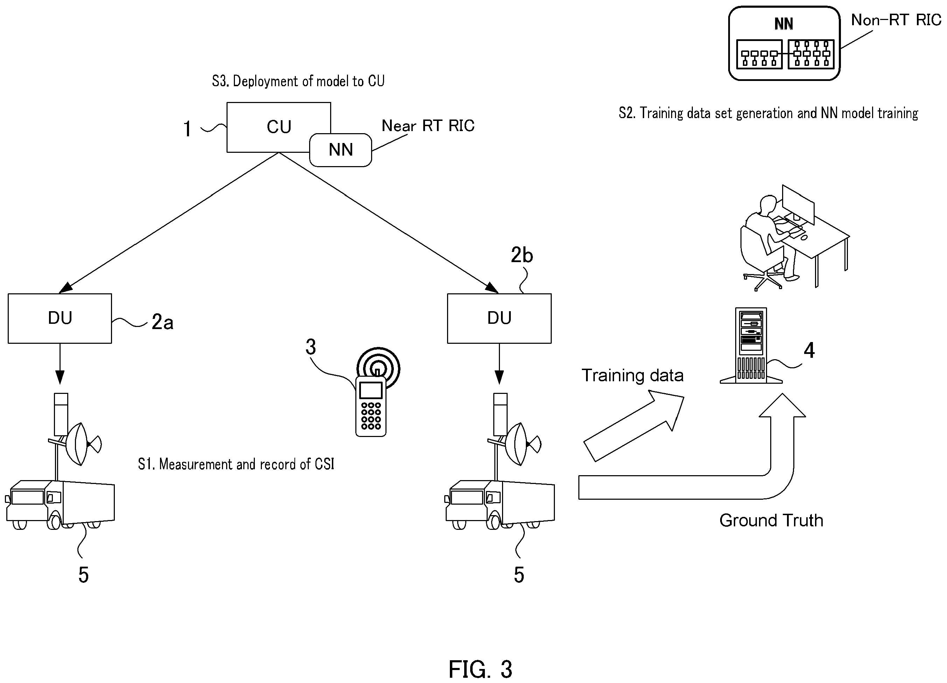

FIG. 3 illustrates an exemplary configuration of a radio system according to the present disclosure. As illustrated in FIG. 3, the radio system includes Central Unit (CU) 1, Distributed Units (DUs) 2a and 2b, terminal 3, server 4, and measurement terminals 5.

CU 1 and DUs 2a and 2b may be each referred to as a base station. The base station may include a Radio Unit (RU, not illustrated). CU 1 may be referred to as, for example, a centralized node, an aggregation node, a centralized station, an aggregation station, or a centralized unit. DUs 2a and 2b may be each referred to as, for example, a distributed node, a distributed station, or a distributed unit. RU may be referred to as, for example, a radio apparatus, a radio node, a radio station, an antenna portion, or a radio unit.

Server 4 may be placed at a data center, for example. Server 4 communicates with CU 1. Server 4 also communicates with measurement terminals 5.

Measurement terminals 5 are respectively mounted on vehicles or the like to measure (collect) and store channel states with DUs 2a and 2b, for example. Measurement terminals 5 transmit the collected CSIs to server 4. Measurement terminals 5 may transmit the collected CSIs to server 4 via DU 2a, DU 2b, and CU 1. Alternatively, measurement terminals 5 may transmit the collected CSIs to server 4 via a radio system or wired system different from and other than DU 2a, DU 2b, and CU 1, or via an external recording medium.

The radio system has two operations: a training action and an operating action. The radio system generates a model of Neural Network (NN) in the training action. The generated model is implemented in CU 1. The radio system estimates a CSI using NN and performs scheduling of terminal 3 in the operating action.

Note that, the training action may be referred to as a training process, an off-line, or a learning phase. The operating action may be referred to as an operating process, online, or an inference phase. Further, the training action may be performed during the operating action.

In the following, descriptions will be given of the training action and the operating action of the radio system. First, an example of the training action of the radio system will be described.

As illustrated in S1 of FIG. 3, measurement terminals 5 measure (store) CSIs between DU 2a and DU 2b. Measurement terminals 5 measure CSIs at a timing of scheduling by CU 1. For example, measurement terminals 5 measure CSIs at the timing illustrated in double-headed arrow A2 of FIG. 1 (e.g., TTI).

As illustrated in S2 of FIG. 3, server 4 generates a training data set from CSIs measured by measurement terminals 5 and then generates an NN model. The training data set can be divided into training data and ground truth. The training data is learning data for the NN model. The ground truth is data used for verification of a learning result.

The training data corresponds to, for example, a CSI to be fed back to CU 1 by terminal 3, of CSIs measured by measurement terminals 5 (e.g., CSI measured at timing of TTI). For example, the training data corresponds to a CSI obtained at the timing illustrated in double-headed arrow A1 of FIG. 1.

The ground truth is, for example, a CSI excluding the training data, of CSIs measured by measurement terminals 5. For example, the ground truth is a CSI excluding the training data, of CSIs measured at TTI intervals. In other words, the ground truth corresponds to a CSI in a period in which terminal 3 does not feed back to CU 1.

As illustrated in S3 of FIG. 3, server 4 deploys (implements) the generated NN model to CU 1.

The training data set may be referred to as learning data. The training data may be referred to as input data or an input value. The ground truth may be referred to as teaching data, correct answer data, or a correct answer value. The NN model may be referred to as a model, a learning model, an AI model, or an AI prediction model. The NN model includes a weight for NN.

As a model to be implemented in CU 1, a model generated in another radio system with similar scenario may be used.

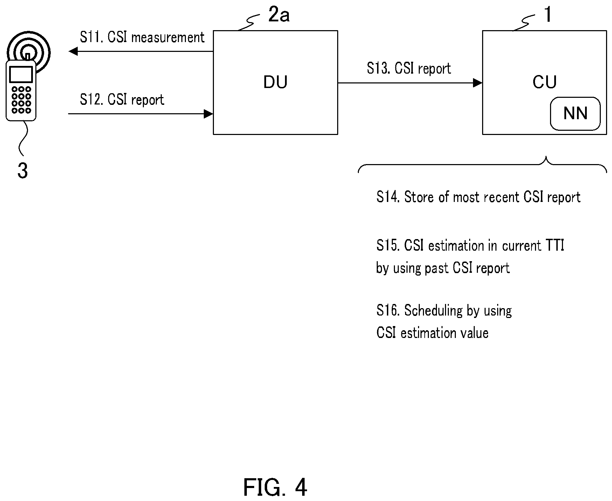

An exemplary operating action of the radio system will be described. FIG. 4 is a diagram provided for describing an operating action of the radio system. In FIG. 4, CU 1, DU 2a, and terminal 3 illustrated in FIG. 3 are illustrated.

As illustrated in S11 of FIG. 4, DU 2a indicates a CSI measuement to terminal 3. DU 2a indicates the CSI measuement in accordance with Third Generation Partnership Project (3GPP) standards, for example.

As illustrated in S12 of FIG. 4, terminal 3 measures a channel state and transmits a CSI report to DU 2a. DU 2a transmits the CSI report in accordance with the 3GPP standards, for example.

As illustrated in S13 of FIG. 4, DU 2a transmits, to CU 1, the CSI report transmitted in S 12.

As illustrated in S14 of FIG. 4, CU 1 stores the CSI report transmitted in S13 (most recent CSI report).

As illustrated in S15 of FIG. 4, CU 1 inputs the past CSI including the most recent CSI into NN and thus estimates a CSI in the current TTI. In NN of CU 1, the model generated in the training action is deployed. The estimated CSI may be referred to as prediction data.

As illustrated in S16 of FIG. 4, CU 1 performs scheduling of terminal 3 by using the CSI estimated in S15.

Machine learning may use an Artificial Intelligence (AI) algorithm with a two-stage configuration using NN. The radio system can perform real-time processing on CSI data by using a Graphics Processing Unit (GPU), for example.

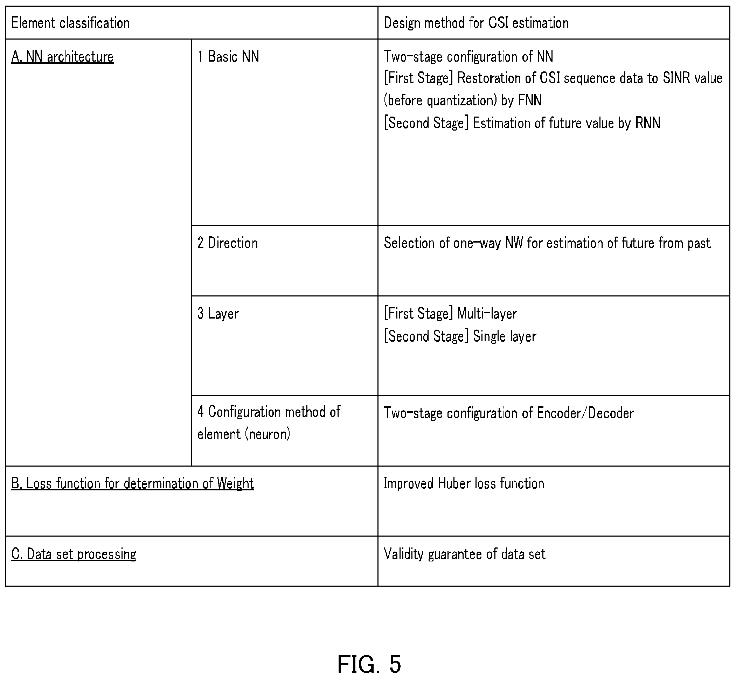

FIG. 5 is a diagram provided for describing an example of machine learning that is applied to the radio system. As illustrated in FIG. 5, machine learning may be classified into, for example, the following elements: A. NN architecture; B. Loss Function for Determining Weight; and C. Data Set Processing.

### A. NN Architecture

The NN architecture can be divided into, for example, a basic NN, a direction, a layer, and a configuration method of an element (neuron).

The basic NN includes, for example, Recurrent NN (RNN), Convolutional NN (CNN), and Full connected NN (FNN). In the present embodiment, NN having the two-stage configuration may be used.

In a first stage, CSI time-sequence data is input. The first stage restores the CSI time-sequence data to a value of a Signal to Interference and Noise power Ratio (SINR) before quantization. FNN may be applied to the first stage.

In the second stage, the CSI time-sequence data and the SINR that is output from the first stage are input. The second stage estimates a future value of a CSI, based on the CSI time-sequence data and the SINR.

In the second stage, the past CSI sequence is input, and the estimated CSI sequence is output. For this reason, RNN may be applied to the second stage as a design for estimation of a CSI sequence.

Examples of the direction include an one-way direction and a two-way direction. In the present embodiment, one-way Network (NW) is selected to estimate the future from the past.

The layer of NN in number ranges from one to several hundreds. In the present embodiment, the first stage may be configured with a plurality of layers. The second stage may be configured with a single layer.

The element (neuron) may be configured with one stage in the case where the future is estimated by using what is known. In the present embodiment, the two-stage configuration of an encoder/decoder may be used.

### B. Loss Function for Determining Weight

Examples of the loss function include an Euclidean distance, a softmax, a contrastive loss, and MSE. In the present embodiment, a modified Hoover loss function may be used.

### C. Data Set Processing

As the data set (training data set), data with guaranteed validity from which inconsistent data and the like are excluded may be used.

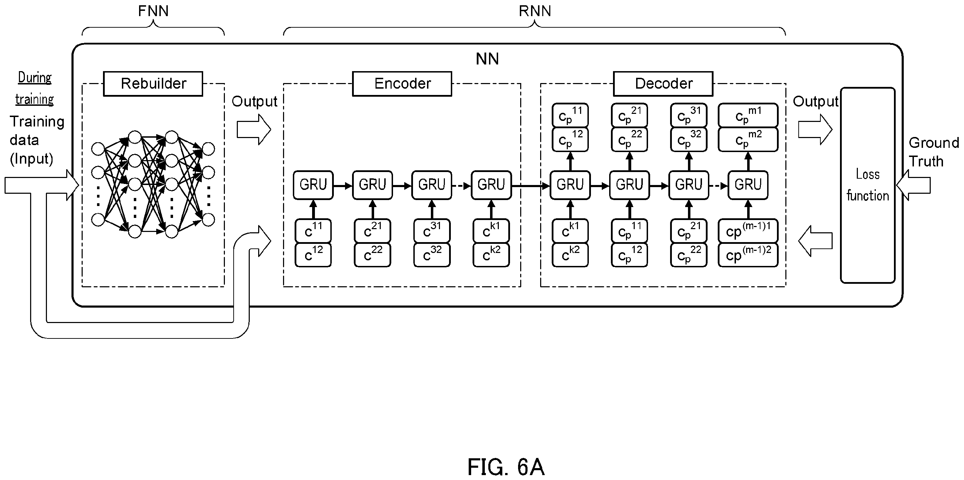

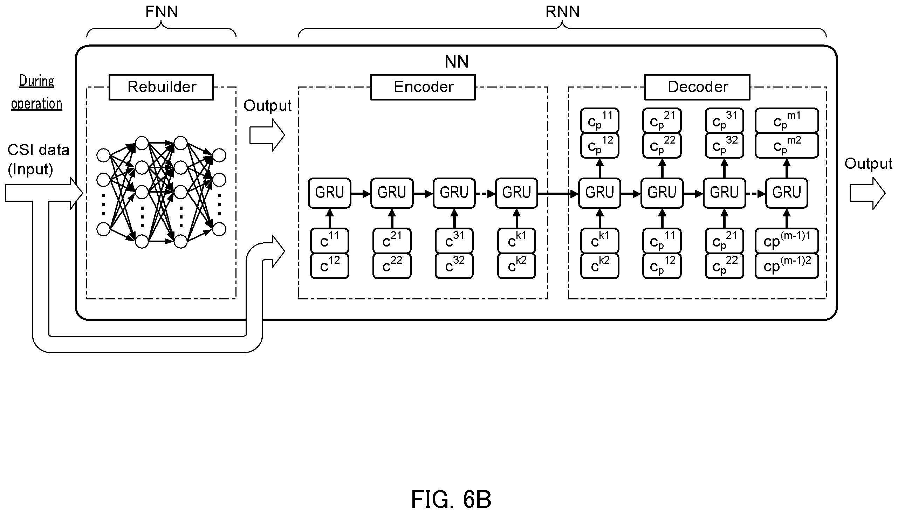

FIGS. 6A and FIG. 6B each illustrates an exemplary NN architecture that is applied to the radio system. FIG. 6A illustrates an exemplary NN architecture in a training action. The NN architecture illustrated in FIG. 6A is implemented in server 4.

FIG. 6B illustrates an exemplary NN architecture in an operating action. The NN architecture illustrated in FIG. 6B is implemented in CU 1.

As illustrated in FIG. 6A and FIG. 6B, NN may be configured with two stages (cascades) of FNN and RNN. References "c" and "cp" in NN illustrated in FIG. 6A and FIG. 6B indicate a weight of NN. The weight may be referred to as a parameter. GRUs illustrated in FIG. 6A and FIG. 6B are Gated Recurrent Unis.

Training data is input to FNN illustrated in FIG. 6A. FNN restores an SINR before quantization, based on the input training data.

The training data and the SINR restored in FNN are input to RNN of FIG. 6A. RNN outputs an estimation value of a CSI, based on the training data and the restored SINR.

In a loss function of FIG. 6A, a CSI (estimation value) output from NN and ground truth are input. The loss function outputs an indication (value) of how close the estimation value output by a model (NN) is to the ground truth. Server 4 determines the weight of NN, based on the value of the loss function. For example, server 4 determines the weight of NN so that the value of the loss function is small.

Server 4 transmits the determined weight of NN to CU 1. CU 1 deploys the weight of NN transmitted from server 4 to NN implemented in CU 1. The weight of NN illustrated in FIG. 6B is the weight determined by server 4.

A CSI transmitted from DUs 2a and 2b is input to FNN illustrated in FIG. 6B. That is, a CSI fed back by terminal 3 is input to FNN illustrated in FIG. 6B. FNN restores an SINR before quantization, based on the input CSI.

The CSI fed back by terminal 3 and the SINR restored in FNN are input to RNN of FIG. 6B. RNN outputs a future CSI (estimation value), based on the CSI fed back by terminal 3 (past CSI including the most recent one) and the restored SINR. A scheduler of CU 1 performs scheduling of terminal 3, based on the CSI output from NN.

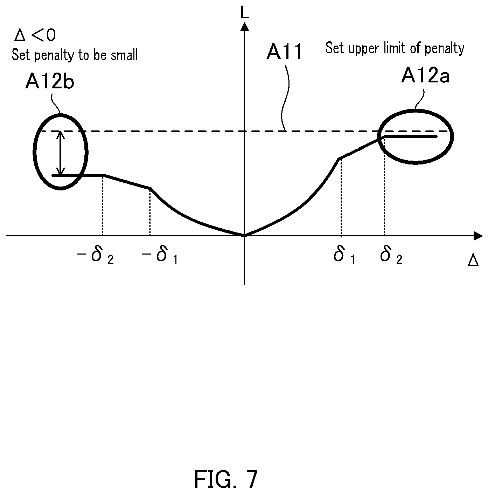

FIG. 7 is a diagram provided for describing a loss funcation. FIG. 7 illustrates a modified Hoover loss function. Horizontal axis Δ of the graph illustrated in FIG. 7 represents an error between an estimation value of a model and ground truth. Vertical axis L represents a vaule for the error of the modified Hoover loss function.

As illustrated in dashed line A11 in the graph of FIG. 7, an upper limit of a penalty is set in the modified Hoover loss function. By way of example, even in a case where an absolute value of error Δ between the estimation value of the model and the ground truth is greater than δ₂, the value of the loss function can be made to not exceed the upper limit of the penalty.

Further, as illustrated in circles A12a and 12b in FIG. 7, the upper limit of the penalty can be made to differ between Δ < 0 and Δ >0.

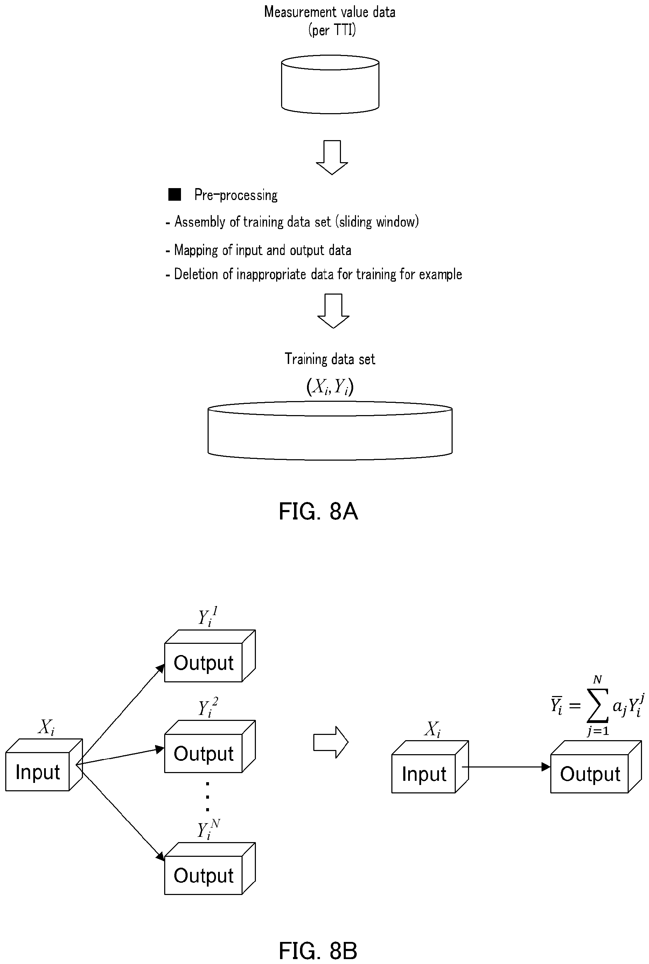

FIG. 8A and FIG. 8B are diagrams each provided for describing an example of data set processing. The data set processing may be divided into, for example, pre-processing and re-processing. FIG. 8A illustrates an example of the pre-processing. FIG. 8B illustrates an example of the re-processing.

Server 4 receives, from measurement terminals 5, measurement value data of a CSI for each TTI. As illustrated in FIG. 8A, server 4 applies a sliding window to the received measurement value data and generates a training data set. Server 4 executes mapping processing of input and output data (mapping processing between training data and ground truth) and generates the training data set. Further, server 4 deletes inappropriate data for training and generates the training data set.

Some training data sets may include a pllurality of different outputs (ground truth) for one input (training data), as illustrated in a left drawing of FIG. 8B. In this case, server 4 averages the different outputs, as illustrated in a right drawing of FIG. 8B.

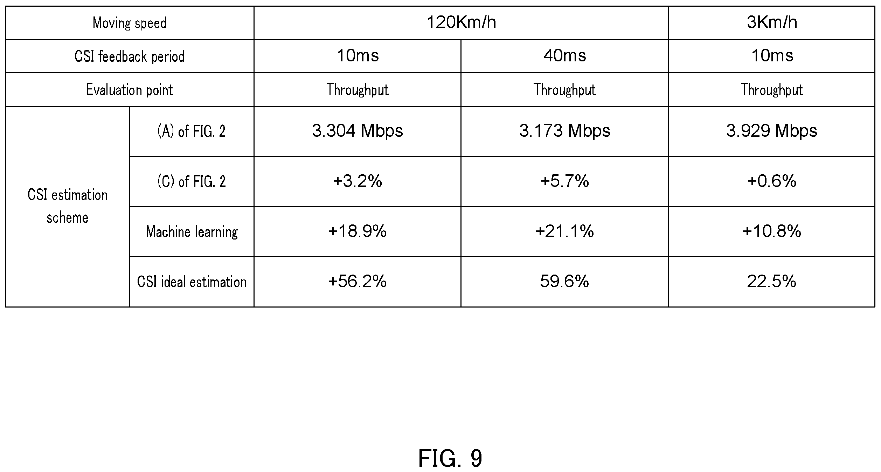

FIG. 9 is a diagram provided for describing performance evaluation of the communication system. A moving speed illustrated in FIG. 9 indicates a moving speed of the terminal. A CSI feedback period indicates a period in which the terminal feeds back a CSI to the base station. An evaluation point is throughput.

FIG. 9 illustrates an evaluation point of a case where a CSI is estimated by using the method in (A) of FIG. 2, an evaluation point of a case where a CSI is estimated by using the method in (C) of FIG. 2, and an evaluation point of a case where a CSI is estimated by using machine learning according to the present embodiment. In addition, FIG. 9 illustrates an evaluation point of a case where a CSI is ideally estimated.

As illustrated in FIG. 9, machine learning according to the present embodiment increases throughput by 18.9% and 21.1% during high-speed moving (120 Km/h) of the terminal, with respect to the method in (A) of FIG. 2. This corresponds to apporximately one third (18.9 / 56.2, 21.1 / 56.6) of the total room for improvement.

Incidentally, in the method in (C) of FIG. 2, an increase in throughput during high-speed moving of the terminal is 3.2% and 5.7% with respect to the method in (A) of FIG. 2.

As illustrated in FIG. 9, machine learning according to the present embodiment increases throughput by 10.8% during low-speed moving (3 Km/h) of the terminal, with respect to the method in (A) of FIG. 2. This corresponds to about one half (10.8 / 22.5) of the total room for improvement.

Incidentally, in the method in (C) of FIG. 2, an increase in throughput during low-speed moving of the terminal is 0.6% with respect to the method in (A) of FIG. 2.

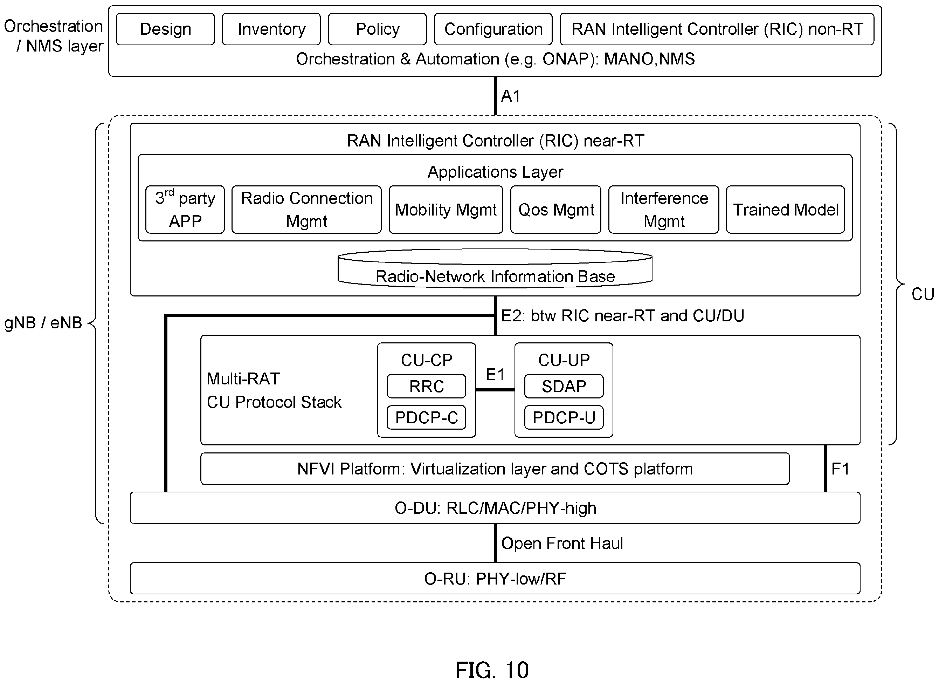

FIG. 10 illustrates a reference architecture of O-RAN. O-RAN includes the architecture illustrated in FIG. 10. RIC illustrated in FIG. 10 is an abbreviation for a RAN Intelligent Controller. CP is an abbreviation for a Control Plane. MANO is an abbreviation for Management and Orchestration. NMS is an abbreviation for a Network Management System. NFVI is an abbreviation for a Network Functions Virtualisation Infrastructure. ONAP is an abbreviation for an Open Network Automation Platform. PDCP is an abbreviation for a Packet Data Convergence Protocol. PHY is an abbreviation for a PHYsical layer. RAT is an abbreviation for a Radio Access Technology. RF is an abbreviation for a Radio Frequency. RLC is an abbreviation for Radio Link Control. RRC is an abbreviation for Radio Link Control. SDAP is an abbreviation for a Service Data Adaptation Protocol. UP is an abbreviation for a User Data Plane.

RIC is a control section responsible for an intelligent RAN. RIC can be divided into non-real-time one (> 1s) and real-time one (< 1s).

The non-real-time RIC performs policy management, a RAN analysis, and AI-based function management. A1 interface is defined between a network maintenance infrastructure, which is responsible for orchestration and automation including the non-real-time RIC, and gNB/eNB, which includes the real-time RIC.

The real-time RIC is a layer that provides an intelligent Radio Resource Management (RRM) function. The real-time RIC is expected to provide functions such as Quality of Service (QoS) management and seamless handover control, in addition to conventional RRM functions such as load balancing and Resource Block (RB) management per User Equipment (UE). As the interface, in addition to A1 interface described above in between with the non-real-time RIC, E2 interface is defined between the real-time RIC and

### CU/O-DU.

A Multi-RAT CU protocol stack is a function layer that supports various protocollayer hierarchies including a plurality of radio accesses in 4G and 5G. The Multi-RAT CU protocol stack has a function that supports virtualization and executes a command from the non-real-time RIC. The Multi-RAT CU protocol stack supports an F1/W1/E1/X2/Xn interface specified in 3GPP.

O-DU/O-RU performs a real-time layer 2 (L2) function, baseband signal processing, and radio signal processing. A front-hole interface is defined between O-DU and O-RU.

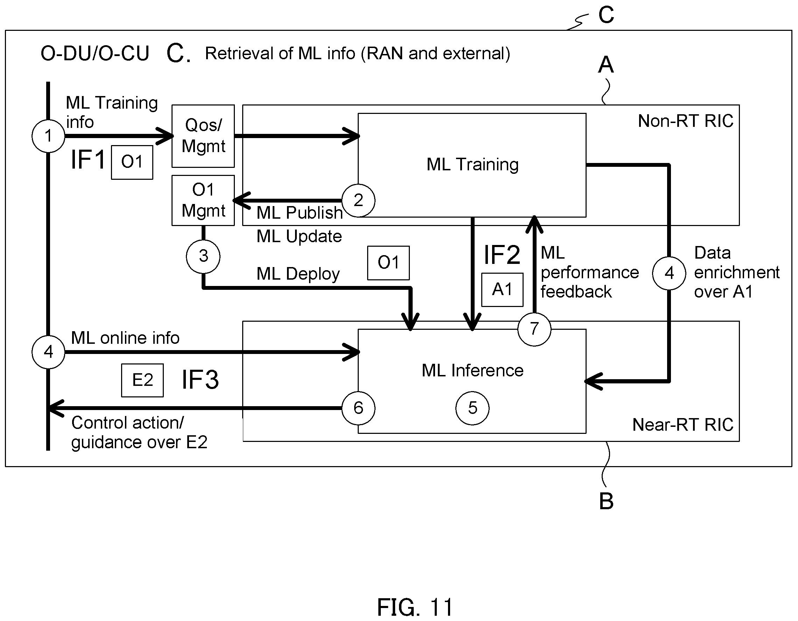

FIG. 11 illustrates an exemplary functional block of the radio system. As illustrated in FIG. 11, the radio system includes modules A, B, and C. Module A and module C perform data transmission via interface IF1. Module A and module B perform data transmission via interface IF2. Module B and module C perform data transmission via interface IF3.

Module A may be referred to as a Non-RT RIC layer. RT is an abbreviation for Real Time. Module A is implemented in server 4.

Module A collects CSIs that have been collected in a lower layer (Module C). In other words, module A collects, in the operating action, CSIs fed back by terminal 3. Module A also collects the actual CSI. In other words, module A collects, in the training action, CSIs which have been measured by measurement terminals 5 and serves as a source of the training data set. Module A has an ML Training function, trains (generates) a model by using the actual CSI, and deploys the trained model to module B. ML is an abbreviation for Machine Learning.

Module B may be referred to as a Near-RT RIC / Modular CU (MCU) layer. Module B is implemented in CU 1.

Module B has an ML inference function. The ML inference function is achieved based on the model trained in Module A. By way of example, module B deploys the model trained in module A to NN and thus achieve the ML inference function.

Module B estimates a CSI based on the ML inference function and the CSIs collected by module C. In other words, in the operating action, module B estimates a CSI based on the CSI fed back by terminal 3. Module B transmits the estimated CSI to module C.

Module C may be referred to as an O-DU/O-CU layer. Module C is implemented in CU 1, DUs 2a and 2b, and measurement terminals 5.

Module C performs scheduling of terminal 3, based on the estimated CSI in module B. By way of example, module C executes processing such as radio resource allocation to terminal 3, MCS selection, and beam selection, based on the CSI estimated in module B.

Module C collects CSIs to be fed back by terminal 3. Module C also collects CSIs serves as a source of the training data set.

Interface IF1 may be referred to as an O1 interface. The CSIs collected in a lower layer is transmitted via interface IF 1. The actual CSI is also transmitted via interface IF1.

Interface IF2 may be referred to as an A1 interface. The trained modele is transmitted via interface IF2.

Model performance is also transmitted via interface IF2. The model performance is evaluation of a model after operation of the radio system. For example, the model performance is an indicator of how accurate the CSI eatimated by the model is. The model performance is generated by module B and is fed back to model A via interface IF2.

Interface IF3 may be referred to as an E2 interface. The CSI estimated by module B (dsitribution of estimation result of CSI) is transmitted via interface IF3.

The CSI fed back by terminal 3 is also transmitted via interface IF3.

Meanwhile, the restored SINR may be transmitted via interface IF3. Module C may perform scheduling of the terminal, based on the CSI and the SINR that have been transmitted via interface IF3.

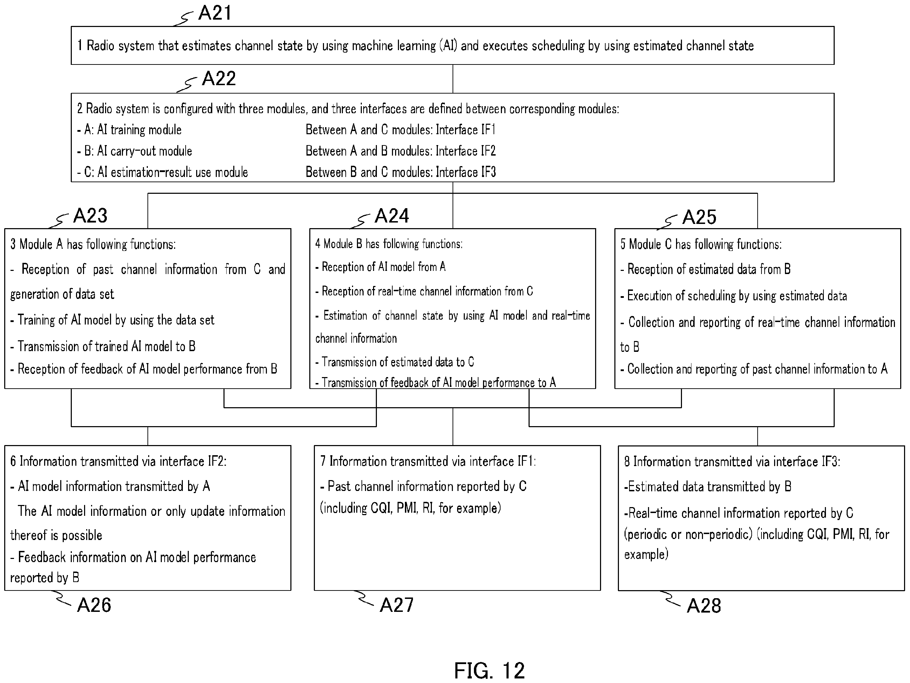

FIG. 12 is another diagram provided for describing an exemplary functional block of the radio system. As illustrated in frame A21 of FIG. 12, the radio system estimates a channel state between the base station and the terminal by using machine learning and performs scheduling by using the estimated channel state. In other words, the radio system performs processing such as radio resource allocation to the terminal, MCS selection, and beam selection, by using the estimated channel state.

As illustrated in frame A22, the radio system includes three modules A, B, and C. Interfaces IF1, IF2, and IF3 are defined between the three modules.

As illustrated in frame A23, module A receives past channel information from module C and generates a data set (training data set). In other words, module A generates a data set by using CSIs measured by measurement terminals 5. Module A trains a model by using the generated data set. Module A transmits the trained model to module B.

Module A receives model performance to be fed back by module B. Module A may train the model by using the received model performance.

As illustrated in frame A24, module B receives the model from module A. Module B receives real-time channel information (information on channel state) from module C. In other words, module B receives, from module C, a CSI fed back by terminal 3. Module B estimates the channel state between the base station and the terminal by using the model and the real-time channel information. Module B transmits the estimated channel state (estimated data) to module C. Module B feeds back the model performance to module A.

As illustrated in frame A25, module C receives the estimated data from module B. Module C performs scheduling by using the received estimated data. Module C collects the real-time channel information and transmits it to module B. Module C also collects the past channel information and reports it to module A. In other words, module C collects CSIs serving as a source of the training data set.

As illustrated in frame A26, the model generated by module A is transmitted via interface IF2. The model to be transmitted via interface IF2 may be update information on the model. For example, the model to be transmitted via interface IF2 may be difference information on a difference in the model. Specifically, a changed weight may be transmitted via interface IF2. Further, information on the model performance to be fed back from module B to module A is transmitted via interface IF2.

As illustrated in frame A27, the past channel information collected by module C is transmitted via interface IF1.

As illustrated in frame A28, the estimated data estimated by module B is transmitted via interface IF3. The real-time channel information collected by module C is transmitted via interface IF3.

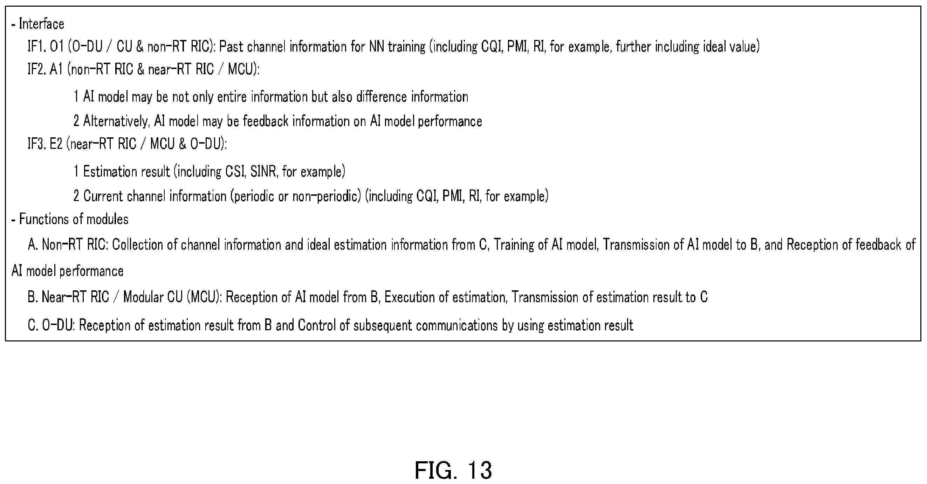

FIG. 13 is still another diagram provided for describing an exemplary functional block of the radio system. As illustrated in FIG. 13, past channel information (including CQI, PMI, RI, and the like, further including ideal value) for NN training is transmitted via interface IF 1.

Model information is transmitted via interface IF2. For the model information, the entire information of the model or difference information may be transmitted. Feedback information for the model performance is transmitted via interface IF2.

An estimation result (channel state estimated by module B) is transmitted via interface IF3. The estimation result may include a restored SINR in addition to the channel state. Further, periodic or non-periodic curernt channel information (including CQI, PMI, RI, and the like) is transmitted via interface IF3.

Module A collects channel information and ideal estimation information from module C. Module A also trains a model and transmits the trained model to module B. Module A receives a feed back of model performance from module B.

Module B receives the model from module A. Module B performs estimation of the channel information. Module B transmits the estimated channel information to module C.

Module C receives an estimation result of the channel information from module B. Module C controls subsequent communications by using the estimation result of the channel information.

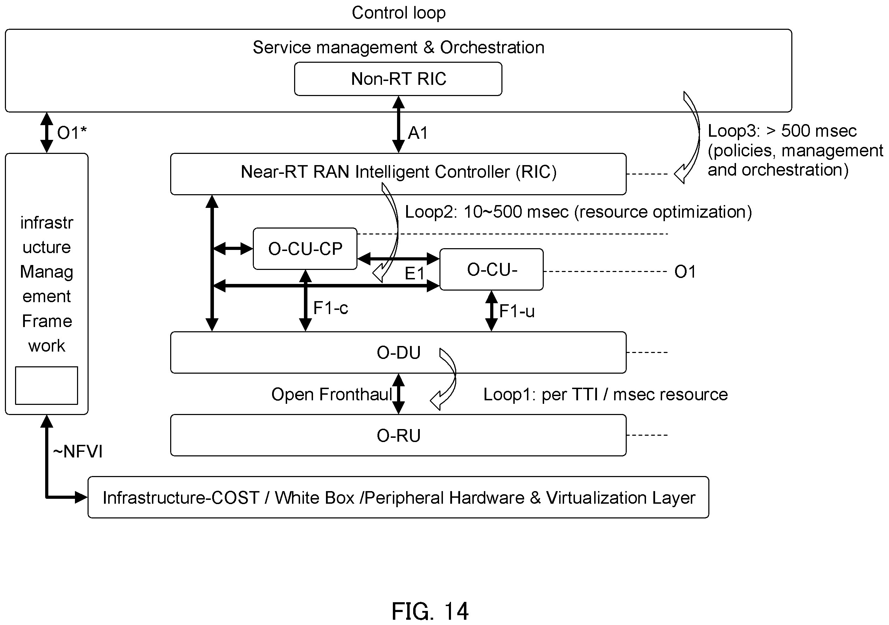

FIG. 14 is a diagram provided for describing an exemplary control timing of the radio system. FIG. 14 illustrates an architecture of the radio system. Loop 1 illustrated in FIG. 14 indicates a processing period in O-DU and O-RU. The processing period of Loop 1 is TTI.

Loop 2 indicates a processing period in a real-time RIC. The processing period of Loop 2 is 10 to 500 msec. The real-time RIC estimate CSIs between processing periods by using machine learning. For example, suppose that the processing period of Loop 2 is 10 msec. The real-time RIC estimates a CSI during an interval of 10 msec (e.g., CSI per TTI such as interval of 1 msec) by using machine learning.

Loop 3 indicates a processing period in a non-real-time RIC. The processing period of Loop 3 is larger than 500 msec.

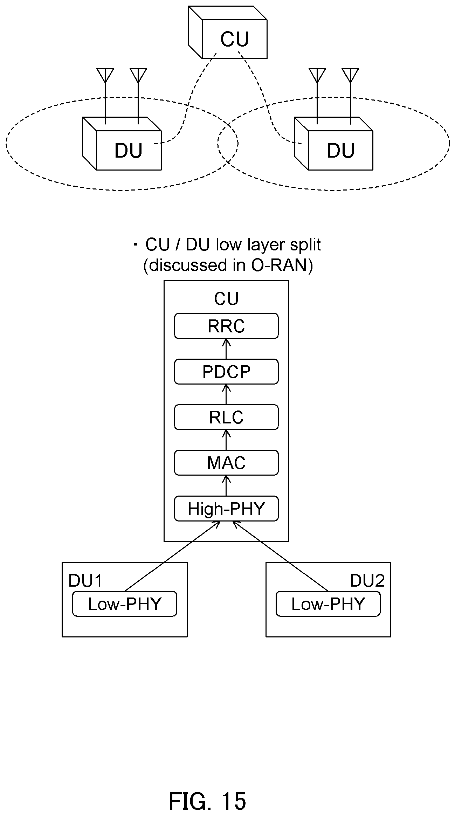

FIG. 15 illustrates architecture examples of CU and DU. O-RAN supports lowlayer division of CU/DU in a physical layer of New Radio (NR). As illustrated in FIG. 15, the physical layer can be divided into High-PHY and Low-PHY The High-PHY is implemented in CU, whereas Low-PHY is implemented in DU.

A layer that is higher than the High-PHY is implemented in CU. For example, MAC, PLC, PDCP, and RRC are implemented in CU.

As described above, the radio system receives the channel state information from the terminal, and estimates the channel state during an interval until reception of the next channel state information, by inputimg the channel state information to machine learning. In suh a manner, the radio system can estimate the channel state for the radio communication by using machine learning.

The functions of server 4 may be achieved by CU 1. That is, CU 1 may have a training function for machine learning.

Further, measurement terminals 5 may collect CSIs and SINRs. Server 4 may generate a model that estimates a CSI and an SINR. CU 1 may perform scheduling of terminal 3 by using the model that estimates a CSI and an SINR. Further, in the above, the term "inference" may be replaced with "prediction," "estimation," "forecast," or the like.

Further, the NN model implemented in CU 1 of FIG. 3 (NN illustrated beside CU 1 in FIG. 3) may correspond to "Near RT RIC" illustrated in FIGS. 10 and 11, for example. The training data set generation and the NN model training in S2 of FIG. 3 may correspond to "Non RT RIC" illustrated in FIGS. 10 and 11, for example.

Further, the interface for transferring the data acquired in S1 of FIG. 3 to "Non RT RIC" may correspond to, for example, the O1 interface of FIG. 11. The data acquired in S1 of FIG. 3 may be accumulated. Meanwhile, CU 1 may include O-CU and Near RT RIC.

The present disclosure has been described above.

### <Hardware Configuration and the like>

Note that, the block diagrams used to describe the above embodiment illustrate blocks on the basis of functions. These functional blocks (component sections) are achieved by any combination of at least hardware or software. A method for achieving the functional blocks is not particularly limited. That is, the functional blocks may be achieved using one physically or logically coupled apparatus. Two or more physically or logically separate apparatuses may be directly or indirectly connected (e.g., via wires or wirelessly), and the plurality of apparatuses may be used to achieve the functional blocks. The functional blocks may be achieved by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit" or "transmitter." The methods for achieving the functions are not limited specifically as described above.

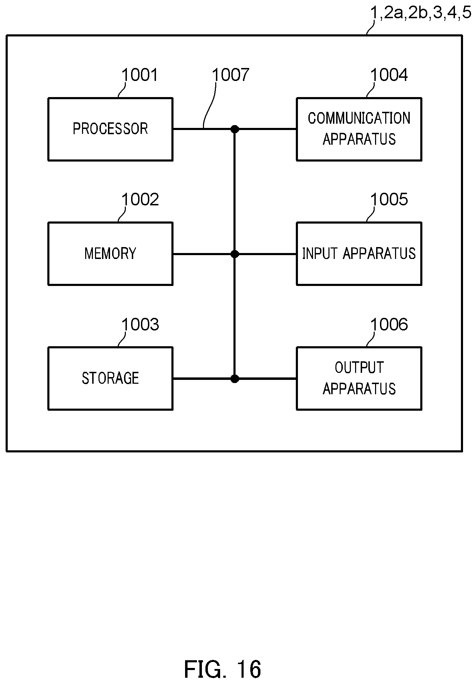

For example, CU 1, DUs 2a and 2b, terminal 3, server 4, measurement terminal 5, and the like according to an embodiment of the present disclosure may function as a computer that executes processing of a wireless communication method of the present disclosure. FIG. 16 illustrates an exemplary hardware configuration of each of CU 1, DUs 2a and 2b, terminal 3, server 4, and measurement terminal 5. CU 1, DUs 2a and 2b, terminal 3, server 4, and measurement terminal 5 described above may be physically constituted as a computer apparatus including processor 1001, memory 1002, storage 1003, communication apparatus 1004, input section 1005, output section 1006, bus 1007, and the like.

Note that, the term "apparatus" in the following description can be replaced with a circuit, a device, a unit, or the like. The hardware configurations of CU 1, DUs 2a and 2b, terminal 3, server 4, and measurement terminal 5 may be configured to include one apparatus or a plurality of apparatuses illustrated in the drawings, or not to include part of the apparatuses.

The functions of CU 1, DUs 2a and 2b, terminal 3, server 4, and measurement terminal 5 are achieved by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003. The functions of modules A, B, and C may be achieved by processor 1001.

Processor 1001 operates an operating system to entirely control the computer, for example. Processor 1001 may be composed of a central processing unit (CPU) including an interface with peripheral apparatuses, control apparatus, arithmetic apparatus, register, and the like.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, CU 1, DUs 2a and 2b, terminal 3, server 4, and measurement terminal 5 may be achieved by a control program stored in memory 1002 and operated by processor 1001, and the other functional blocks may also be achieved in the same way. While it has been described that the various types of processing as described above are performed by one processor 1001, the various types of processing may be performed by two or more processors 1001 at the same time or in succession. Processor 1001 may be implemented by one or more chips. Note that, the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the wireless communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (e.g., a compact disc, a digital versatile disc, or a Blue-ray (registered trademark) disc), a smart card, a flash memory (e.g., a card, a stick, or a key drive), a floppy (registered trademark) disk, and a magnetic strip. Storage 1003 may also be called an auxiliary storage apparatus. The storage medium as described above may be, for example, a database, a server or other appropriate media including at least one of memory 1002 and storage 1003.

Communication apparatus 1004 is hardware (transmission and reception device) for communication between computers through at least one of wired and wireless networks and is also called, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. Interfaces 1, 2, and 3 may be achieved by communication apparatus 1004.

An input apparatus (e.g., a keyboard apparatus, a mouse, a microphone, a switch, a button, or a sensor) that receives input from the outside and an operation apparatus (e.g., dial) are connected to input section 1005. An output apparatus (e.g., a display, a speaker, or an LED lamp) is connected to output section 1006. Note that, input section 1005 and output section 1006 may be an integrated apparatus (e.g., a touchscreen).

The apparatuses, such as processor 1001, memory 1002 and the like, are connected by bus 1007 for communication of information. Bus 1007 may be configured using one bus or using buses different between each pair of the apparatuses.

Furthermore, CU 1, DUs 2a and 2b, terminal 3, server 4, and measurement terminal 5 may include hardware, such as a microprocessor, a digital signal processor (DSP), an ASIC (Application Specific Integrated Circuit), a PLD (Programmable Logic Device), and an FPGA (Field Programmable Gate Array), and the hardware may achieve part or all of the functional blocks. For example, processor 1001 may be implemented using at least one of these pieces of hardware.

### <Notification and Signaling of Information>

The notification of information is not limited to the aspects and embodiment described in the present disclosure, and the information may be notified by another method. For example, the notification of information may be carried out by one or a combination of physical layer signaling (e.g., DCI (Downlink Control Information) and UCI (Uplink Control Information)), higher layer signaling (e.g., RRC (Radio Resource Control) signaling, MAC (Medium Access Control) signaling, notification information (MIB (Master Information Block) and SIB (System Information Block))), and other signals. The RRC signaling may be called an RRC message and may be, for example, an RRC connection setup message, an RRC connection reconfiguration message, or the like.

### <Application System>

The aspects and embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UMB (Ultra-WideBand), Bluetooth (registered trademark), or other appropriate systems and a next-generation system extended based on the above systems. Additionally or alternatively, a combination of two or more of the systems (e.g., a combination of at least one of LTE and LTE-A and 5G) may be applied.

### <Processing Procedure and the like>

The orders of the processing procedures, the sequences, the flow charts, and the like of the aspects and embodiment described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by a higher node (upper node) depending on the situation. Various operations performed for communication with a terminal in a network constituted by one network node or a plurality of network nodes including a base station can be obviously performed by at least one of the base station and a network node other than the base station (examples include, but not limited to, MME and S-GW). Although there is one network node in addition to the base station in the case illustrated above, a plurality of other network nodes may be combined (e.g., MME and S-GW).

### <Direction of Input and Output>

The information or the like (*see the item of "Information and Signals") can be output from a higher layer (or a lower layer) to a lower layer (or a higher layer). The information or the like may be input and output through a plurality of network nodes.

### <Handling of Input and Output Information and the like>

The input and output information and the like may be saved in a specific place (e.g., memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (e.g., comparison with a predetermined value).

### <Variations and the like of Aspects>

The aspects and embodiment described in the present disclosure may be independently used, may be used in combination, or may be switched and used along the execution. Further, notification of predetermined information (e.g., notification indicating "it is X") is not limited to explicit notification, and may be performed implicitly (e.g., by not notifying the predetermined information).

While the present disclosure has been described in detail, it is obvious to those skilled in the art that the present disclosure is not limited to the embodiment described in the present disclosure. Modifications and variations of the aspects of the present disclosure can be made without departing from the spirit and the scope of the present disclosure defined by the description of the appended claims. Therefore, the description in the present disclosure is intended for exemplary description and does not limit the present disclosure in any sense.

### <Software>

Regardless of whether the software is called software, firmware, middleware, a microcode, or a hardware description language or by another name, the software should be broadly interpreted to mean instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that, the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### < "System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (e.g., PUCCH and PDCCH) and information elements can be identified by any suitable names, and various names allocated to these various channels and information elements are not limitative in any respect.

### <Base Station>

The terms "base station (BS)," "wireless base station," "fixed station," "NodeB," "eNodeB (eNB)," "gNodeB (gNB)," "access point," "transmission point," "reception point," "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (e.g., three) cells. When the base station accommodates a plurality of cells, the entire coverage area of the base station can be divided into a plurality of smaller areas, and each of the smaller areas can provide a communication service based on a base station subsystem (e.g., small base station for indoor (RRH: Remote Radio Head)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be IoT (Internet of Things) equipment such as a sensor.

The base station in the present disclosure may also be replaced with the user terminal. For example, the aspects and embodiment of the present disclosure may find application in a configuration that results from replacing communication between the base station and the terminal with communication between multiple terminals (such communication may, e.g., be referred to as D2D (Device-to-Device), V2X (Vehicle-to-Everything), or the like). In this case, the user terminal may be configured to have the functions that the base station described above has. The wordings "uplink" and "downlink" may be replaced with a corresponding wording for inter-terminal communication (e.g., "side"). For example, an uplink channel, a downlink channel, and the like may be replaced with a side channel.

Similarly, the user terminal in the present disclosure may be replaced with the base station. In this case, the base station is configured to have the functions that user terminal described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### <Reference Signal>

The reference signal can also be abbreviated to an RS and may also be called a pilot depending on the applied standard.

### <Meaning of "Based On">

The description "based on" used in the present disclosure does not mean "based only on," unless otherwise specified. In other words, the description "based on" means both of "based only on" and "based at least on."

### <"First" and "Second">

Any reference to elements by using the terms "first," "second" and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open Form>

In a case where terms "include," "including," and their modifications are used in the present disclosure, these terms are intended to be inclusive like the term "comprising." Further, the term "or" used in the present disclosure is not intended to be an exclusive or.

### <Time Units such as TTI, Frequency Units such as RB, and Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology indicates, for example, at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., OFDM (Orthogonal Frequency Division Multiplexing) symbol, SC-FDMA (Single Carrier-Frequency Division Multiple Access) symbol, or the like) in the time domain. The slot may also be a time unit based on the numerology.

The slot may include a plurality of mini-slots. Each of the mini slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini-slot, and the symbol indicate time units in transmitting signals. The radio frame, the subframe, the slot, the mini-slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (e.g., 1 to 13 symbols) that is shorter than 1 ms, or a duration that is longer than 1 ms. Note that, a unit that represents the TTI may be referred to as a slot, a mini-slot or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that can be used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (e.g., the number of symbols) to which the transport block, the code block, the codeword or the like is actually mapped may be shorter than the TTI.

Note that, in a case where one slot or one mini-slot is referred to as the TTI, one or more TTIs (that is, one or more slots or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that, the long TTI (e.g., the usual TTI, the subframe, or the like) may be replaced with the TTI that has a time length which exceeds 1 ms, and the short TTI (e.g., the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini-slot, one subframe, or one TTI. One TTI and one subframe may be constituted by one resource block or a plurality of resource blocks.

Note that, one or more RBs may be referred to as a Physical Resource Block (PRB: Physical RB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common RBs (common resource blocks) for certain numerology in a certain carrier. Here, the common RBs may be identified by RB indices that use a common reference point of the carrier as a reference. The PRB may be defined by a certain BWP and may be numbered within the BWP.

The BWP may include a BWP for LTL (UL BWP) and a BWP for DL (DL BWP). An UE may be configured with one or more BWPs within one carrier.

At least one of the configured BWPs may be active, and the LTE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

An aspect of the present disclosure is useful for a radio system.

### Reference Signs List

1 CU
2a, 2b DU
3 Terminal
4 Server
5 Measurement terminal

## Claims

1. A channel state estimation method, comprising:
receiving, by a radio system, channel state information from a terminal; and
estimating, by the radio system, a channel state during an interval until reception of next channel state information, by inputting the channel state information to machine learning.

2. The channel state estimation method according to claim 1, wherein:
the radio system includes a first module, a second module, and a third module, wherein
the first module generates a model of the machine learning by using collected channel information collected by a measurement terminal,
the second module estimates the channel state during the interval until the reception of the next channel state information, by using the model and the channel state information that has been received from the terminal, and
the third module receives the channel state information from the terminal and receives the collected channel information from the measurement terminal.

3. The channel state estimation method according to claim 2, wherein:
the first module receives the collected channel information from the third module via a first interface connecting between the first module and the third module,
the second module receives the model from the first module via a second interface connecting between the second module and the first module, and
the third module transmits the channel information that has been received from the terminal to the second module via a third interface connecting between the third module and the second module.

4. The channel state estimation method according to claim 3, wherein:
the second module transmits, to the third module via the third interface, the channel state during the interval until the reception of the next channel state information, and
the third module performs scheduling of the terminal by using the channel state in the interval until the reception of the next channel state information.

5. The channel state estimation method according to claim 3, wherein the second module feeds back performance of the model to the first module via the second interface.

6. A base station, comprising:
a reception section that receives channel state information from a terminal; and
an estimation section that estimates a channel state during an interval until reception of next channel state information, by inputting the channel state information to machine learning.
